# EUROPÄISCHE PATENTANMELDUNG

(11) **EP 1 452 848 A1**
(43) Veröffentlichungstag der Anmeldung: **01.09.2004**
(21) Anmeldenummer: 04450033.8
(22) Anmeldetag: 18.02.2004
(51) Int. Cl.: G01M 15/00

(54) **Verfahren zur Steuerung eines Antriebsmotorprüfstandes**

(30) Priorität: 28.02.2003 AT 1302003 U
(71) Anmelder: AVL List GmbH, 8020 Graz (AT)
(72) Erfinder: Langthaler, Peter, 4048 Puchenau (AT); Grünbacher, Engelbert, 4840 Vöcklabruck (AT); Kokal, Helmut, 8503 St. Josef (AT); Steinmaurer, Gerald, 4600 Wels (AT); del Re, Luigi, 4040 Linz (AT)
(74) Vertreter: Pinter, Rudolf, Dipl.-Ing.

(57) **Zusammenfassung**

Ausgehend von einem Prüfstandsaufbau bestehend mindestens aus einer Brennkraftmaschine (1) mit der eigenen Sensorik, Aktorik und Steuereinrichtungen, einer Leistungsbremse (2) und einem die Brennkraftmaschine (1) und die Leistungsbremse (2) steuernden Prüfstandsrechner (5), der Steuergrößen für Brennkraftmaschine (1) und Leistungsbremse (2) aufgrund von Sollwertvorgaben berechnet, wird die Aufgabe, diese Brennkraftmaschine (1) mit Hilfe der Leistungsbremse (2) so zu betreiben, wie sie in einem vom Anwender zu wählenden Fahrzeug gemäß einem ebenfalls vom Anwender vorzugebenden Fahrprofil betrieben würde, derart gelöst, dass vor der eigentlichen Messung eine vordefinierte, vom Anwender nicht zu präzisierende Messung vorgezogen wird und dass aufgrund dieser Messung Parameter für eine Rechenvorschrift (9) der Sollwertvorgaben der Steuergrößen unter Berücksichtigung der Eigenschaften des Prüfstands bestimmt und am Prüfstandsrechner (5) eingestellt werden, ohne die Parametereinstellung des Prüfstandsrechners (5) oder der Steuereinrichtung der Brennkraftmaschine zu verändern, wobei während des eigentlichen Prüflaufs die Betriebsgrößen der Brennkraftmaschinen (1) überwacht und für die Anpassung der Parameter der Sollwertberechnung verwendet werden können.

## Beschreibung

Die Erfindung betrifft ein Verfahren zur Steuerung eines Prüfstandes für eine als Antriebsmotor eines Fahrzeuges vorgesehene, abtriebsseitig mit einer Leistungsbremse verbundene Brennkraftmaschine, wobei über einen Prüfstandsrechner ein Fahrzeugmodell und ein Fahrprofil für das Fahrzeug vorgegeben werden und die Brennkraftmaschine über entsprechend dem Fahrzeugmodell und dem Prüfstandsaufbau ermittelte Sollwert-Vorgaben der Steuereinrichtungen der Brennkraftmaschine und der Leistungsbremse dieselben Arbeitspunkte durchläuft, die sie im Fahrzeug während des vorgegebenen Fahrzyklus durchlaufen würde.

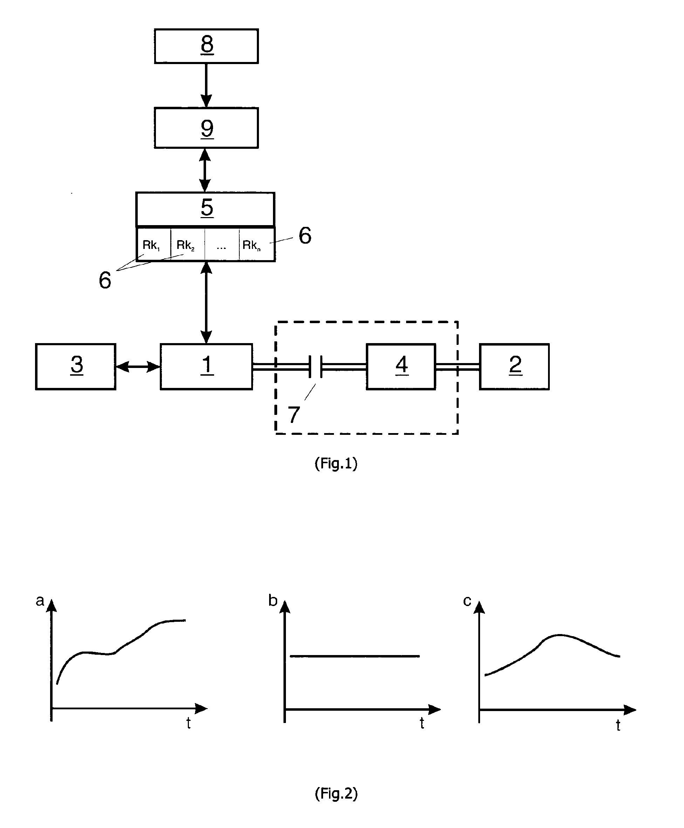

Verfahren der genannten Art sind bekannt und an Prüfständen, wie sie hauptsächlich (aber nicht ausschließlich) in der Fahrzeugindustrie Verwendung finden im Einsatz um realistische Prüfungen der Brennkraftmaschine bereits vor ihrem Einbau in das Fahrzeug durchführen zu können. Der Aufbau eines entsprechenden Prüfstandes ist in der Zeichnung in Fig.1 schematisch dargestellt. Die Brennkraftmaschine 1 ist abtriebsseitig mit einer Leistungsbremse 2 verbunden und weist eine sie steuernde Einrichtung 3, meist als ECU (Engine Control Unit) bezeichnet, auf. Weiters ist ein Prüfstandsrechner 5 angeschlossen, der über eigenen Regelkreise 6 verfügt, um entsprechende Stellglieder an der Brennkraftmaschine sowie den Arbeitspunkt der Leistungsbremse 2 zu steuern, und der aus entsprechenden Meßeinrichtungen die wichtigsten Betriebsgrößen der Brennkraftmaschine 1 erfaßt oder berechnet. Dabei werden die einzelnen Regelkreise 6 des Prüfstandsrechners 5 in der Regel als Nachfolgeregler ausgelegt, die den Ausgang eines gegebenen Stellgliedes möglichst gleich dem Wert eines entsprechendes Sollwertes halten. Sollwerte werden meist vom Anwender festgelegt z.B. in der Form einer Vorgabe von Drehzahl (n) und Drehmoment (M) oder Pedalwertgeberstellung (PWG, α), können aber auch vorgespeichert oder von einem anderen Programm berechnet werden. Weiterhin kann ein solcher Prüfstand auch ein Getriebe 4 und/oder eine Kupplung 7 enthalten.

Solche Prüfstandsaufbauten werden im vorliegenden Falle verwendet, um das Verhalten der Brennkraftmaschine 1 im Falle eines Einsatzes in einem Fahrzeug vor deren Einbau zu prüfen. In einem solchen Fall ist es wichtig, dass die Brennkraftmaschine 1 der vorgesehenen Anwendung entsprechend betrieben wird. Diese wird meistens durch Fahrzeugparameter sowie durch ein Fahrprofil 8 spezifiziert, die innerhalb gewisser Grenzen eingehalten werden müssen. Dies setzt u.a. die Nachbildung der Stellgrößen so voraus, wie sie ein reeller, mit Rollenprüfstandsabläufen erfahrener Fahrer vorgeben würde. Dies kann nicht mehr vom Anwender vorgegeben werden, sondern setzt eine entsprechende Berechnungsvorschrift 9 voraus, die u.a. die virtuelle Geschwindigkeit des durch die Brennkraftmaschine 1 anzutreibenden Fahrzeugs schätzt und auf deren Verlauf genauso reagiert, wie ein erfahrener Fahrer es machen würde. Die zur Abbildung des Fahrerverhaltens verwendete Berechnungsvorschrift kann als Fahrermodell bzw. Fahrerregler bezeichnet werden, weil ein Fahrer in Wirklichkeit wie ein Regler arbeitet. Die Leistungsbremse 2 muss ebenfalls die Brennkraftmaschine 1 mit dem Lastmoment belasten, das der Belastung der Brennkraftmaschine 1 im reellen Fahrzeug entspricht.

Um eine realistische Nachbildung der Fahrbedingungen zu erreichen, ist gemäß dem heutigen Stand der Technik bei derartigen Prüfständen eine aufwendige Abstimmungsarbeit notwendig, bei der es darum geht, den Prüflauf immer wieder durchzuführen und nach jedem Lauf die Parameter des Fahrermodells oder auch von Prüfstandsreglern solange abzustimmen, bis das Gesamtergebnis zufriedenstellend wird. Gemäß dem heutigen Stand der Technik werden grundsätzlich dann die Parameter eingefroren und während des Zeitablaufes der eigentlichen Prüfung festgehalten.

Zwar gibt es Vorschläge, wie z.B. in DE 4428818 oder DE 4428815, die ausdrücklich die Möglichkeit vorsehen, Betriebsgrößen der Brennkraftmaschine während des Prüflaufs zu beobachten und einen Regler aus einer vorgegebenen Menge oder die Reglerparameter entsprechend auszuwählen oder anzupassen. Diese Verfahren setzen allerdings voraus, dass vor Beginn der Messung mindestens die Parameter für den Betrieb der Brennkraftmaschine für den ersten Prüfstandslauf abgelegt sind. Mit anderen Worten muss die Anordnung im voraus ausreichend bekannt und ein für den konkreten Prüfstandslauf brauchbarer Parametersatz auf irgendeine Weise bestimmt worden sein. Diese Verfahren sehen auch die Möglichkeit vor, den geplanten Prüflauf ein erstes Mal durchzuführen und nach diesem Prüflauf die Parameter anzupassen.

Die erwähnten bekannten Verfahren haben insbesonders den Nachteil, dass die Bestimmung der Parameter des ersten notwendigen Parametersatzes sehr zeitaufwändig ist und nur iterativ geschehen kann. Um überhaupt in vernünftiger Zeit zu entsprechenden Ergebnissen zu kommen sind erfahrene Prüfstands-Bedienkräfte erforderlich. Zudem sind bei vielen Versuchen, z.B. bei Kaltstarttests, lange Abkühlzeiten zwischen einzelnen Prüfstandsläufen einzuhalten, die dann insgesamt zu übermäßig langen Vorbereitungszeiten für die eigentliche Messung führen.

Aufgabe der vorliegenden Erfindung ist es, die erwähnten Nachteile der bekannten Verfahren zu vermeiden und insbesonders die erwähnte komplizierte Vorabbestimmung eines ersten brauchbaren Parametersatzes überflüssig zu machen.

Die erwähnte Aufgabe wird gemäß der vorliegenden Erfindung bei einem Verfahren der eingangs genannten Art dadurch gelöst, dass vor dem eigentlichen Prüflauf in einer von diesem unabhängigen Messphase die zur Ermittlung der Sollwert-Vorgaben erforderlichen Parameter bestimmt und am Prüfstandsrechner eingestellt werden, und dass während des eigentlichen Prüflaufes die Betriebsgrößen der Brennkraftmaschine überwacht und erforderlichenfalls für die Anpassung der Parameter der Sollwert-Vorgaben verwendet werden. Es ist also vorgesehen, dass in einer ersten Phase nicht der beabsichtigte Prüfstandslauf, sondern eine spezifische, ohne Vorgabe oder Festlegung von Parametern durch den Anwender selbständig bestimmte, möglichst kurze Messung durchgeführt wird, die sich nur an den Sicherheitsgrenzen des Betriebs der Maschine zu orientieren hat. Diese Sicherheitsgrenzen legen abhängig von der Steuergröße den Messbereich fest und können einfach dem Prüfstandsparametersatz entnommen werden.

Weiter Merkmale und Vorteile des erfindungsgemäßen Verfahrens sowie bevorzugte Ausgestaltungen werden im folgenden anhand der schematischen Zeichnungen näher erläutert. Fig.1 zeigt dabei die eingangs bereits angesprochene Anordnung nach dem Stande der Technik, Fig.2 anhand von beispielhaften Messdiagrammen eine vorgelagerte Messphase gemäß der Erfindung, Fig.3 die zugehörigen nicht linearen Übertragungsfunktionen und Fig.4 ein Beispiel für einen Teil der tatsächlichen Messanordnung zur Durchführung der Verfahrens gemäß der Erfindung.

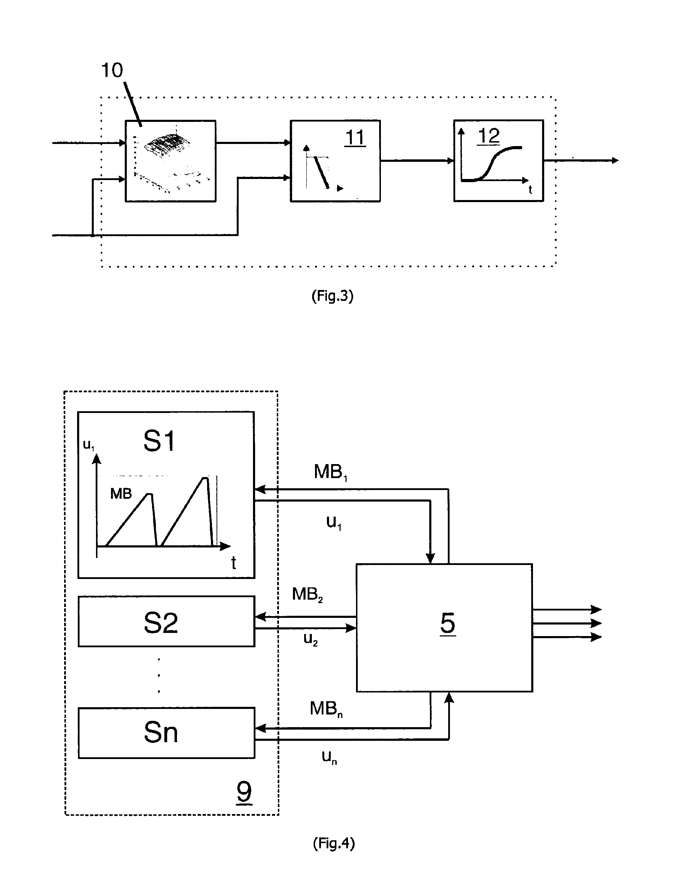

Fig.2 illustriert beispielhaft eine Vorab-Messung des Verfahrens nach der Erfindung. Ein Eingang (a) des Prüflings (bzw. ein Ausgang einer Stelleinrichtung) wird gemäß einem vorgegebenen Profil verändert, die Mehrheit der übrigen Eingänge (hier b) wird konstant gehalten, während ein Ausgang (hier c) als Informationskanal verwendet wird. Auf diese Weise ist es möglich, stationäre Übertragungsfunktionen zwischen zwei Kanälen zu bilden oder auch wie in Fig.3 angedeutet, nichtlineare Übertragungsfunktionen abzustimmen (mit 10 ist in Fig.3 das Kennfeld der Brennkraftmaschine, mit 11 ein Verzögerungsglied und mit 12 ein Tiefpassglied bezeichnet).

Als mögliches Beispiel eines Vorversuchs eines Prüfstandslaufs betrachte man Fig.3, welches die angenommene Systemstruktur beschreibt, wobei das Tiefpassglied 12 sowohl die Dynamik der Brennkraftmaschine als auch die Dynamik der vorgeschalteten Steuereinrichtung inklusive der im Prüfstandsrechner vorhandenen und durch diese Erfindung nicht zu verändernden lokalen Regelkreise betrifft. Je nach Motorausstattung kann im Verzögerungsglied 11 auch noch die Dynamik oder sonstige Regelfunktionen der Steuereinrichtungen, die üblicherweise einer Brennkraftmaschine zugeordnet sind, enthalten sein. Die Abläufe sehen die Durchfahrt von dynamischen Kurven vor, im Gegensatz etwa zu DE 4428815 also keine stationären Messungen, die einem einzelnen Arbeitspunkt zugeordnet werden können, bei progressiver Veränderung des Stellgliedes. Im Falle einer Otto-Brennkraftmaschine also beispielsweise die Drosselklappe oder im Falle einer Diesel-Brennkraftmaschine beispielsweise die Förderpumpeneinstellung. Aufgrund der speziellen Systemstruktur von Fig. 3 ist für die Vorabmessung eine separate Analyse von stationärem- und dynamischem Verhalten nützlich. Weiters kann durch das Weglassen der dynamischen Messung die Zeit der Vorabmessung reduziert werden, ohne dabei die Funktionsfähigkeit der Berechnungsvorschrift (9) zu verlieren.

Eine tatsächliche Messanordnung zur Durchführung des erfindungsgemäßen Verfahrens wird in Fig.4 beispielhaft dargestellt. Dabei liefert der Prüfstandsrechner 5 die dort gespeicherten Informationen über Sicherheitsbereiche an die Berechnungsvorschrift 9, die auf dieser Grundlage den tatsächlichen Verlauf der Messungen gemäß Fig.2 festlegt. Vorteilhafterweise haben solche Messungen z.B. den im oberen linken Teil der Fig.4 dargestellten Verlauf, sind also Drehmomentrampen (MB).

Als essentielle Steuer- und Messgrößen für Prüfstände sind Kombinationen aus Drehzahl (n) und Drehmoment (M) oder Pedalwertgeberstellung (PWG, α) bekannt. Somit sind diese Größen auf jedem Prüfstand zugänglich und können zur Steuerung verwendet werden. Jegliche Mess- oder Steuergrößenerweiterung (oder -änderung) von Prüfständen ist optional und daher nicht als Basis für eine möglichst universell anwendbare Steuerstruktur geeignet. Weiters erhöht die Erweiterung der Messgrößen die Komplexität der Steuerstruktur und zieht somit eine zeitliche Verlängerung der Vorabmessung nach sich.

Aufgrund dieser ersten, mit dem eigentlichen Prüflauf nicht näher zusammenhängenden Messung werden die Parameter eines Motormodells bzw. die für die Berechnung der Sollwerte der Steuergrößen (S1....Sn) notwendigen Parameter des Fahrermodells bestimmt. Dabei werden keine Regelkreise des Prüfstandsrechner 5, die für den allgemeinen Betrieb des Prüfstands notwendig sind und die auch für andere Messungen z.B. stationäre Kennfeldmessungen verwendet werden (z.B. Drehmoment- oder Drehzahlregelungen) verändert, sondern es wird eine angepasste Sollwertgröße berechnet, die für die Steuerung des Gesamtsystems verwendet wird. Es werden also Vorgaben für die Regelkreise der Steuereinrichtungen der Brennkraftmaschine sowie der Leistungsbremse ermittelt, die durch den Prüfstandsrechner 5 eingestellt werden, aber keine Parameter dieser Regelkreise oder der Regelkreise der Steuereinrichtungen der Brennkraftmaschine verändert.

Der Anwender sieht als besonderes Merkmal des erfindungsgemäßen Verfahrens, dass im Falle einer noch nicht bekannten Brennkraftmaschine, zuerst eine besondere Messung, welche untenstehend noch beispielhaft erklärt wird, vorgenommen wird, ohne dass der Anwender dafür Vorgaben oder spezifische Parameter eingeben muss. Natürlich sind auch Mischformen möglich, bei denen eine solche Sollwertberechnung mit anderen Vorschriften kombiniert werden kann, die Sollwerte aufgrund von Parametereingaben berechnen. Weiters besteht für den Anwender die Möglichkeit, eine für seinen Anwendungsfall spezifische optimierte Berechnungsvorschrift zu verwenden.

Erkennbar ist das erfindungsgemäße Verfahren weiters auch daran, dass die Bestimmung der Gesamtvorgabe für die Regelkreise des Prüfstandsrechners prüfstandsabhängig erfolgt. Konkret heißt dies, dass die selbe Eingabe durch den Anwender bei unterschiedlichen Prüfständen oder Brennkraftmaschinen nach dem Testlauf zu unterschiedlichen Steuergrößenverläufen führt. Dies rührt daher, dass die Zusammenschaltung der Steuerkreise des Prüfstandsrechners, der Brennkraftmaschine und der Leistungsbremse als Gesamtsystem analysiert wird, d.h. bei Übertragung des gleichen, aus dieser Abstimmung resultierenden Parametersatzes auf einen anderen Prüfstand mit der gleichen Brennkraftmaschine, sind deutlich unterschiedliche Steuergrößenverläufe zu erhalten. Erkennbar ist weiterhin die Tatsache, dass sich die Abstimmung der Sollwertberechnung während des gesamten Prüflaufs durchzieht. Der am Ende des Prüflaufes ermittelte Parametersatz kann für die Bestimmung der Steuergröße für einen neuen Lauf verwendet werden (muss aber nicht) wodurch in der Regel wesentlich bessere Ergebnisse erzielt werden. Durch das wiederholte Erneuern des Parametersatzes werden Fehler der Steuergrößenberechnung, welche aufgrund von Ungenauigkeiten für die Bestimmung des ersten Parametersatzes, oder von Änderungen der Umgebungsvariablen des Prüfstandes auftreten, minimiert.

Zwar sind auch in anderen Bereichen der Technik Verfahren bekannt, mit denen sich ein System in einer ersten Phase vordefinieren lässt. So sind etwa bei Werkzeugmaschinen Identifikationsverfahren für die Dynamik der Strecke bekannt, und in einem anderen Bereich der Fahrzeugtechnik, bei der Inbetriebnahme von Fahrrobotern bei Rollenprüfstandsprüfungen, sind ebenfalls Vorversuche üblich. Allerdings betreffen diese Vorversuche eine wesentlich einfachere Umgebung, weil einerseits in diesen Fällen ein reelles Fahrzeug vorhanden ist und andererseits die Leistungsbremse nicht beeinflusst wird, während es sich bei der hier beschriebenen Erfindung um ein Verfahren für das Gesamtverhalten des Verbundes der Brennkraftmaschine, Prüfstandsrechner und Leistungsbremse handelt, ohne dass ein reelles Fahrzeug vorliegt, sodass auch das Verhalten der Belastung der Brennkraftmaschine durch diese Abläufe bestimmt wird.

## Patentansprüche

1. Verfahren zur Steuerung eines Prüfstandes für eine als Antriebsmotor eines Fahrzeuges vorgesehene, abtriebsseitig mit einer Leistungsbremse verbundene Brennkraftmaschine, wobei über einen Prüfstandrechner ein Fahrzeugmodell und ein Fahrprofil für das Fahrzeug vorgegeben werden und die Brennkraftmaschine über entsprechend dem Fahrzeugmodell und dem Prüfstandsaufbau ermittelte Sollwert-Vorgaben der Steuereinrichtungen der Brennkraftmaschine und der Leistungsbremse dieselben Arbeitspunkte durchläuft, die sie im Fahrzeug während des vorgegebenen Fahrzyklus durchlaufen würde, **dadurch gekennzeichnet, dass** vor dem eigentlichen Prüflauf in einer von diesem unabhängigen Messphase die zur Ermittlung der Sollwert-Vorgaben erforderlichen Parameter bestimmt und am Prüfstandrechner eingestellt werden und dass während des eigentlichen Prüflaufes die Betriebsgrößen der Brennkraftmaschine überwacht und erforderlichenfalls für die Anpassung der Parameter der Sollwert-Vorgaben verwendet werden.

2. Verfahren nach Anspruch 1, **dadurch gekennzeichnet, dass** in der vorgelagerten Messphase zumindest eine Quasistationärmessung in einem mehrdimensionalen Kennfeld, vorzugsweise im Kennfeld n, M, α (PWG) durchgeführt wird, bei der immer eine der Größen verändert, eine gemessen und die restlichen konstant gehalten werden.

3. Verfahren nach Anspruch 2, **dadurch gekennzeichnet, dass** in der vorgelagerten Messphase zusätzlich zumindest eine dynamische Messung durchgeführt wird in der eine der Größen in Sprüngen geändert, eine gemessen und die restlichen konstant gehalten werden.

4. Verfahren nach einem oder mehreren der Ansprüche 1 bis 3 **dadurch gekennzeichnet, dass** durch unterschiedliche Gewichtung der Parameter bei der Ermittlung der Sollwert-Vorgaben die Nachfolge-Genauigkeit des Fahrprofils und damit der Typ des simultierten Fahrers verändert wird.
